# DEMANDE DE BREVET EUROPEEN

(11) **EP 4 752 066 A1**
(43) Date de publication de la demande: **03.06.2026**
(21) Numéro de dépôt: 25218905.5
(22) Date de dépôt: 27.11.2025
(51) Int. Cl.: B64D 27/40, B64C 3/32

(54) **ENSEMBLE POUR AÉRONEF COMPORTANT DES MOYENS POUR FIXER UNE AILE À UN MÂT RÉACTEUR**

(30) Priorité: 28.11.2024 FR 2413136
(71) Demandeur: AIRBUS OPERATIONS (S.A.S.), 31060 Toulouse (FR)
(72) Inventeur: GUENEAU, Germain, 31060 TOULOUSE (FR); COMBES, Pierre-Antoine, 31060 TOULOUSE (FR); DE NICOLA, Marc, 31060 TOULOUSE (FR)
(74) Mandataire: Cabinet Le Guen Maillet

(57) **Abrégé**

L'invention concerne un ensemble (1) pour aéronef comportant un mât réacteur (106) avec des panneaux latéraux (208a-b) et des longerons supérieur (204) et inférieur (206), une ferrure additionnelle (104c) fixée à une structure (104a) d'une aile, des chapes tribord (252a) et bâbord (252b) fixées à la structure (104a) et articulées sur le panneau latéral (208a-b) associé, une bielle avant (254) montée articulée entre le longeron supérieur (204) et la ferrure additionnelle (104c), une bielle arrière (256) montée articulée entre le longeron inférieur (206) et la structure (104a), et un plot d'axe parallèle à une direction verticale (Z) et présentant une extrémité proximale solidaire du longeron supérieur (204) et une extrémité distale montée dans une fenêtre de la ferrure additionnelle (104c) à travers une liaison linéaire annulaire.

Avec un tel ensemble, les chemins de transfert des efforts sont multipliés.

## Description

### DOMAINE TECHNIQUE

La présente invention concerne un ensemble pour aéronef comportant des moyens pour fixer une aile à un mât réacteur, ainsi qu'un aéronef comportant une aile et un tel ensemble.

### ÉTAT DE LA TECHNIQUE ANTÉRIEURE

Habituellement, pour un aéronef, un ensemble de propulsion comporte un turboréacteur qui est fixé sous une aile de l'aéronef à l'aide d'un mât réacteur. Le mât réacteur est généralement constitué d'une structure primaire formée d'un caisson constitué d'un longeron supérieur, d'un longeron inférieur et de deux panneaux latéraux reliant les deux longerons et de nervures internes réparties le long du caisson.

Le turboréacteur est fixé sous le mât réacteur au moyen d'attaches moteur qui comprennent classiquement, à l'avant, une attache moteur avant, à l'arrière, une attache moteur arrière, et entre les attaches moteur avant et arrière, un assemblage de reprise d'effort de poussée comprenant des bielles de reprise, fixées d'une part au turboréacteur, et d'autre part à un sabot solidaire de la structure primaire du mât, pour absorber les forces de poussée générées par le turboréacteur.

Un système de fixation lie le mât réacteur à l'aile. Ce système de fixation réagit et absorbe les moments de flexion et les efforts tranchants à l'interface du mât réacteur avec l'aile. Un exemple d'un tel arrangement est décrit dans le document US-A-2016/0221682.

Bien que de tels systèmes de fixation donnent satisfaction, il est souhaitable de trouver des arrangements différents en particulier pour créer une architecture hyperstatique ce qui multiplie les chemins de transfert des efforts allant du réacteur à la structure de l'aile.

### EXPOSÉ DE L'INVENTION

Un objet de la présente invention est de proposer un ensemble pour aéronef comportant des moyens pour fixer une aile à un mât réacteur où les moyens de fixation créent une architecture hyperstatique.

À cet effet, est proposé un ensemble pour un aéronef comportant une aile avec une structure, ledit ensemble présentant une direction verticale et un plan médian vertical et comportant :
- un mât réacteur présentant une structure primaire formant un caisson et comportant un panneau latéral tribord, un panneau latéral bâbord, un longeron supérieur et un longeron inférieur,
- une ferrure additionnelle destinée à être fixée à la structure de l'aile,
- une chape tribord et une chape bâbord disposées de part et d'autre du plan médian vertical, chacune étant destinée à être fixée à la structure de l'aile et chacune étant montée articulée sur le panneau latéral qui est du même côté,
- une bielle avant disposée dans le plan médian vertical, dont une extrémité amont est montée articulée sur le longeron supérieur et dont une extrémité aval est montée articulée sur la ferrure additionnelle,
- une bielle arrière disposée dans le plan médian vertical, dont une extrémité amont est montée articulée sur le longeron inférieur et dont une extrémité aval est destinée à être montée articulée sur la structure de l'aile, et
- un plot d'axe parallèle à la direction verticale et présentant une extrémité proximale solidaire du longeron supérieur et une extrémité distale montée dans une fenêtre de la ferrure additionnelle à travers une liaison linéaire annulaire.

Avec un tel ensemble, les chemins de transfert des efforts sont multipliés.

Avantageusement, le plot est mobile en translation par rapport à la ferrure additionnelle parallèlement à une direction longitudinale.

Avantageusement, l'ensemble comporte une bague qui a une surface extérieure sphérique et qui est emmanchée sur l'extrémité distale du plot, une noix qui a une surface intérieure sphérique dans laquelle la bague est logée, où de part et d'autre de la noix, la surface extérieure de la noix présente une nervure parallèle à la direction longitudinale, où, sur les bords de la fenêtre, la ferrure additionnelle présente pour chaque nervure, un évidement s'étendant parallèlement à la direction longitudinale dans laquelle ladite nervure est guidée en translation.

Avantageusement, le plot est constitué de deux demi-cylindres accolés le long d'un plan, où l'extrémité proximale de chaque demi-cylindre est fixée au longeron supérieur.

Avantageusement, chaque articulation prend la forme d'une rotation autour d'un axe perpendiculaire au plan médian vertical.

Avantageusement, pour chaque chape, l'ensemble comporte une bielle complémentaire dont une première extrémité est destinée à être montée articulée sur la structure de l'aile et dont une deuxième extrémité est montée articulée sur le panneau latéral qui est du même côté.

Avantageusement, chaque articulation d'une bielle complémentaire est réalisée par un arbre complémentaire qui traverse un alésage de ladite bielle complémentaire et un alésage respectivement du panneau latéral associé ou de la structure de l'aile.

Avantageusement, l'alésage de la bielle complémentaire correspondant à la liaison avec le panneau latéral présente un diamètre supérieur au diamètre de l'arbre complémentaire associé.

L'invention propose également un aéronef comportant, une aile avec une structure, un turboréacteur et un ensemble selon l'une des variantes précédentes, où la ferrure additionnelle est fixée à la structure de l'aile, où chaque chape est fixée à la structure de l'aile, où l'extrémité aval de la bielle arrière est montée articulée sur la structure de l'aile et où le turboréacteur est fixé sous le mât réacteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective et de derrière d'un ensemble selon l'invention,
Fig. 3 est une représentation schématique en vue de côté d'une variante de réalisation de l'invention,
Fig. 4 est une vue en perspective d'un détail de réalisation de l'ensemble selon l'invention,
Fig. 5 montre le détail de la Fig. 4 vu en coupe par le plan V, et
Fig. 6 est une vue éclatée de certains éléments du détail de la Fig. 4.

### EXPOSÉ DÉTAILLÉ DE MODES DE RÉALISATION

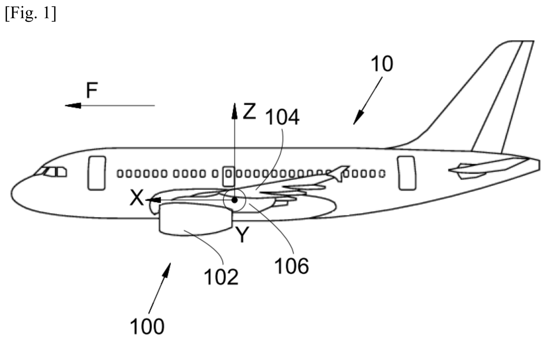

La Fig. 1 montre un aéronef 10 qui comporte un système de propulsion 100 avec un turboréacteur 102 lié à une aile 104 de l'aéronef 10 par l'intermédiaire d'un mât réacteur 106. Le mât réacteur 106 et les moyens de fixation décrits ci-dessous qui assurent la fixation du mât réacteur 106 à l'aile 104 forment un ensemble selon l'invention. Le turboréacteur 102 est fixé sous le mât réacteur 106.

Dans la description qui suit, les termes relatifs à une position sont pris en référence à un aéronef en position normale de vol, c'est-à-dire comme il est représenté sur la Fig. 1 et les positions « avant » et « arrière » sont prises par rapport à l'avant et l'arrière du turboréacteur et par rapport à la direction d'avancement F de l'aéronef 10 lorsque le turboréacteur 102 fonctionne.

Dans la description qui suit, et par convention, on appelle X, la direction longitudinale de l'ensemble qui est parallèle à l'axe longitudinal du turboréacteur, on appelle Y la direction transversale qui est horizontale lorsque l'aéronef est au sol, et Z la direction verticale qui est verticale lorsque l'aéronef est au sol, ces trois directions X, Y et Z étant orthogonales entre elles. Le turboréacteur 102 présente une forme de révolution autour de son axe longitudinal.

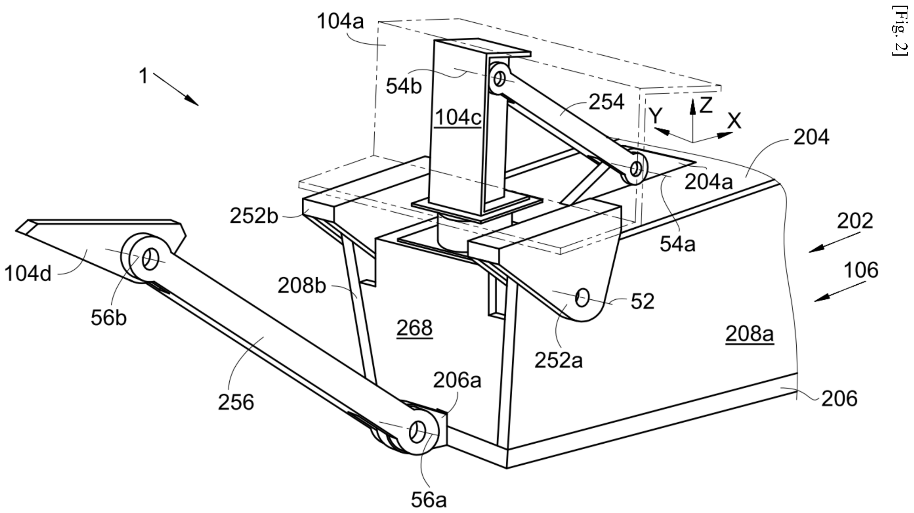

La Fig. 2 représente l'ensemble 1 selon l'invention.

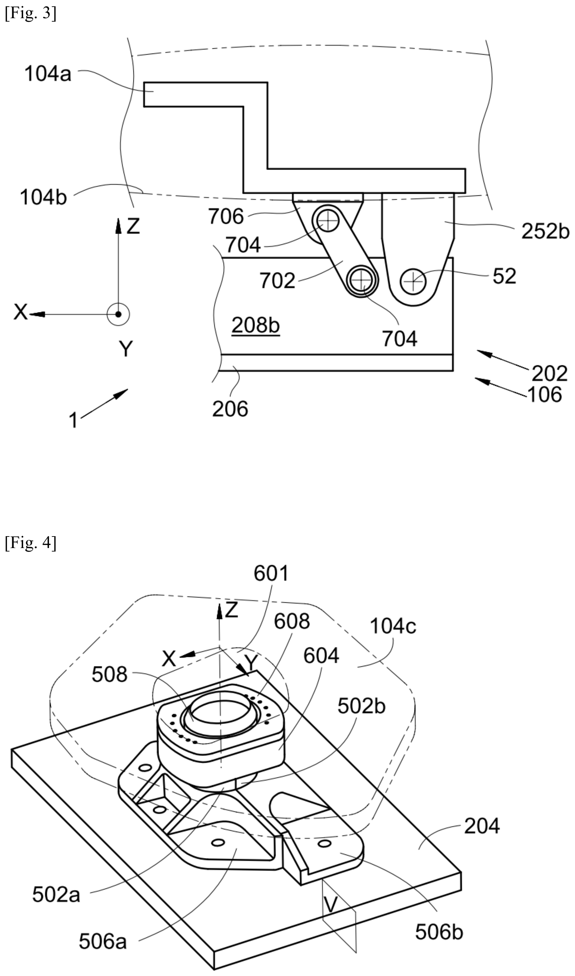

Comme le montrent la Fig. 2 et la Fig. 3, l'aile 104 présente une structure 104a (vue en traits fantômes sur la Fig. 2) qui est rigide et prend ici la forme de longerons s'étendant le long de la direction transversale Y. L'aile 104 présente également un panneau d'intrados 104b, (en traits fantômes sur la Fig. 3) qui recouvre au moins en partie la partie inférieure de la structure 104a.

Classiquement, l'aile 104 comporte également un panneau d'extrados qui recouvre au moins en partie la partie supérieure de la structure 104a.

Le mât réacteur 106 comprend une structure rigide 202 formant un caisson et également appelée structure primaire. La structure primaire 202 est formée d'un longeron supérieur 204, d'un longeron inférieur 206, ainsi que d'un panneau latéral tribord 208a et d'un panneau latéral bâbord 208b reliant les deux longerons 204 et 206. La structure primaire 202 peut également comporter des nervures internes réparties à l'intérieur de la structure primaire 202 et liées aux longerons 204 et 206 et aux panneaux latéraux 208a-b. La structure primaire 202 comporte également une nervure arrière 268 qui ferme le caisson à l'arrière et qui est globalement perpendiculaire à la direction longitudinale X.

La structure primaire 202 est globalement symétrique par rapport à un plan médian XZ de l'ensemble 1 qui s'étend verticalement.

La structure primaire 202 soutient le turboréacteur 102 par l'intermédiaire d'attaches moteur qui peuvent être de conception conventionnelle telles que celles divulguées dans le document US-A-2016/0221682.

La fixation en cascade du turboréacteur 102 au mât réacteur 106 puis à la structure 104a de l'aile 104 assure le transfert des efforts du turboréacteur 102 vers l'aile 104.

L'ensemble 1 comporte également une chape tribord 252a et une chape bâbord 252b, où chacune est fixée rigidement à la structure 104a de l'aile 104 par tous moyens appropriés comme des éléments de vissage, des points de soudure... Chaque chape 252a-b peut être fixée directement à la structure 104a de l'aile 104 ou par l'intermédiaire de ferrures intermédiaires.

Chaque chape 252a-b est également montée articulée sur le panneau latéral 208a-b de la structure primaire 202 qui est du même côté. Les chapes 252a-b sont ainsi disposées de part et d'autre du plan médian vertical XZ. Les articulations des deux chapes 252a-b par rapport aux panneaux latéraux 208a-b prennent ici la forme de rotation autour d'un même axe d'articulation 52 qui est perpendiculaire au plan médian vertical XZ et donc parallèle à la direction transversale Y.

Ces articulations assurent le transfert des efforts en Z et en X. Les chapes 252a-b sont arrangées au niveau de la partie arrière de la structure primaire 202 au voisinage de la nervure arrière 268.

Chaque articulation d'une chape 252a-b est réalisée ici par un arbre latéral (non représenté) qui traverse un alésage du panneau latéral 208a-b associé et un alésage de ladite chape 252a-b. Il y a ainsi deux arbres latéraux disposés de part et d'autre du plan médian vertical XZ.

Ici, chaque chape 252a-b constitue une chape femelle dans laquelle s'emmanche le panneau latéral 208a-b associé qui forme alors une chape mâle.

L'ensemble 1 comporte également une bielle avant 254 qui comporte une extrémité amont et une extrémité aval. L'extrémité amont est montée articulée sur le longeron supérieur 204 et l'extrémité aval est montée articulée sur la structure 104a de l'aile 104.

L'articulation sur la structure 104a s'effectue ici par l'intermédiaire d'une ferrure additionnelle 104c fixée à la structure 104a. La bielle avant 254 est disposée dans le plan médian vertical XZ. L'articulation de la bielle avant 254 au niveau de son extrémité amont et l'articulation de la bielle avant 254 au niveau de son extrémité aval prennent chacune ici la forme d'une rotation autour respectivement d'un axe d'articulation amont 54a et d'un axe d'articulation aval 54b qui sont perpendiculaires au plan médian vertical XZ et donc parallèles à la direction transversale Y.

La bielle avant 254 assure le transfert des efforts axiaux selon X. L'extrémité amont de la bielle avant 254 est vers l'avant et vers le bas par rapport à l'extrémité aval de la bielle avant 254. Chaque articulation de la bielle avant 254 est réalisée ici par un arbre, et il y a donc un arbre amont et un arbre aval (non représentés), où l'arbre amont traverse un alésage d'une ferrure supérieure 204a solidaire du longeron supérieur 204 et un alésage de l'extrémité amont de la bielle avant 254 et où l'arbre aval traverse un alésage de la ferrure additionnelle 104c et un alésage de l'extrémité aval de la bielle avant 254.

Ici, chaque extrémité de la bielle avant 254 constitue une chape femelle dans laquelle s'emmanche respectivement la ferrure supérieure 204a et la ferrure additionnelle 104c, chacune formant alors une chape mâle.

L'ensemble 1 comporte également une bielle arrière 256 qui comporte une extrémité amont et une extrémité aval. L'extrémité amont est montée articulée sur le longeron inférieur 206 et l'extrémité aval est montée articulée sur la structure 104a de l'aile 104. L'articulation sur la structure 104a s'effectue ici par l'intermédiaire d'une ferrure supplémentaire 104d fixée à la structure 104a. La bielle arrière 256 est disposée dans le plan médian vertical XZ.

L'articulation de la bielle arrière 256 au niveau de son extrémité amont et l'articulation de la bielle arrière 256 au niveau de son extrémité aval prennent chacune ici la forme d'une rotation autour respectivement d'un axe d'articulation amont 56a et d'un axe d'articulation aval 56b qui sont perpendiculaires au plan médian vertical XZ et donc parallèles à la direction transversale Y. La bielle arrière 256 assure le transfert des efforts axiaux selon X. L'extrémité amont de la bielle arrière 256 est vers l'avant et vers le bas par rapport à l'extrémité aval de la bielle arrière 256. Chaque articulation de la bielle arrière 256 est réalisée ici par un arbre et il y a donc un arbre amont et un arbre aval (non représentés), où l'arbre amont traverse un alésage d'une ferrure arrière 206a solidaire du longeron inférieur 206 et un alésage de l'extrémité amont de la bielle arrière 256 et où l'arbre aval traverse un alésage de la ferrure supplémentaire 104d et un alésage de l'extrémité aval de la bielle arrière 256.

Ici, chaque extrémité de la bielle arrière 256 constitue une chape femelle dans laquelle s'emmanchent respectivement la ferrure arrière 206a et la ferrure supplémentaire 104d, chacune formant alors une chape mâle.

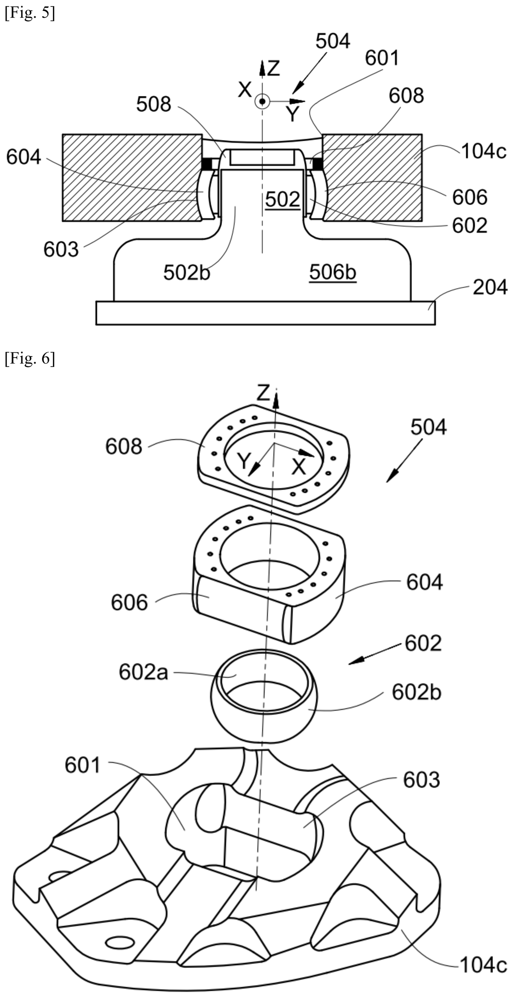

La fixation du mât réacteur 106 à l'aile 104 est également assurée par un plot 502 (Figs. 4 et 5) sous la forme d'un cylindre droit dont l'axe est parallèle à la direction verticale Z. Le plot 502 présente une extrémité proximale solidaire du longeron supérieur 204 et une extrémité distale montée dans une fenêtre 601 de la structure 104a de l'aile 104 et plus particulièrement ici de la ferrure additionnelle 104c à travers une liaison linéaire annulaire 504, c'est-à-dire que le plot 502 est monté dans la fenêtre 601 à travers une liaison rotule et le plot 502 est également mobile en translation par rapport à une ferrure additionnelle 104c parallèlement à la direction verticale Z. Le plot 502 se projette vers le haut depuis le longeron supérieur 204.

Un tel arrangement permet de générer un arrangement hyperstatique qui multiplie les chemins de transfert des efforts. Tous les efforts sont repris au niveau de la structure 104a de l'aile 104 à travers le panneau d'intrados 104b ce qui permet de limiter les efforts sur ledit panneau d'intrados 104b.

Selon un arrangement particulier, le plot 502 est également mobile en translation par rapport à la ferrure additionnelle 104c parallèlement à la direction longitudinale X. Cet arrangement assure le transfert des efforts en Y mais évite de transmettre les efforts en X.

Les Figs. 4 à 6 montrent un mode de réalisation de la liaison entre le plot 502 et la ferrure additionnelle 104c.

L'ensemble 1 comporte une bague 602 qui est percée d'un alésage central 602a qui est emmanché sur l'extrémité distale du plot 502, et où le plot 502 est mobile en translation dans ledit alésage central 602a parallèlement à la direction verticale Z. Par ailleurs, la bague 602 présente une surface extérieure 602b qui est sphérique.

L'ensemble 1 comporte également une noix 604 dont la surface intérieure est sphérique et dans laquelle la bague 602 est logée. La bague 602 est ainsi mobile en rotation dans la noix 604.

Ici, l'ensemble 1 présente également une plaque de blocage 608 qui est fixée à la noix 604, par exemple par vis, et qui bloque la rotation de la noix 604 par rapport à la ferrure additionnelle 104c.

La bague 602, la noix 604 et la plaque de blocage 608 sont logées dans la fenêtre 601 de la ferrure additionnelle 104c dont la forme est adaptée.

Pour assurer la translation du plot 502 parallèlement à une direction longitudinale X, la noix 604 présente sur sa surface extérieure deux nervures 606 qui sont de part et d'autre de la noix 604 par rapport au plan médian vertical XZ. Chaque nervure 606 est parallèle à la direction longitudinale X et prend ici la forme d'une portion de cylindre.

Sur les bords de la fenêtre 601, la ferrure additionnelle 104c présente pour chaque nervure 606, un évidement 603 qui s'étend parallèlement à la direction longitudinale X et dans laquelle ladite nervure 606 est guidée en translation.

Pour des raisons de redondance, le plot 502 est constitué ici de deux demi-cylindres 502a-b qui sont de part et d'autre d'un plan YZ perpendiculaire à la direction longitudinale X. Les deux demi-cylindres 502a-b sont ainsi accolés le long dudit plan YZ et l'extrémité proximale de chaque demi-cylindre 502a-b est fixée au longeron supérieur 204, ici par l'intermédiaire d'un sabot 506a-b fixé par exemple par des éléments de visserie au longeron supérieur 204. Ainsi en cas de rupture de l'un ou l'autre des demi-cylindres 502a-b, l'autre prend le relais.

Pour maintenir les deux demi-cylindres 502a-b accolés, l'extrémité distale du plot 502 est recouverte d'un manchon 508.

Le moment autour de la direction longitudinale X (Mx) est repris par un différentiel de Z (efforts verticaux) appliqué par les chapes 252a-b. Le moment autour de la direction transversale Y (My) est repris par deux efforts opposés dans les bielles avant 254 et arrière 256. Le moment autour de la direction verticale Z (Mz) est repris par un différentiel de X (efforts axiaux) appliqués par les chapes 252a-b.

En cas de rupture de l'une des bielles avant 254 et arrière 256, les efforts transitant par cette bielle sont repris par l'autre bielle et les chapes 252a-b.

La Fig. 3 montre une variante de réalisation de l'invention qui permet de compenser une rupture de l'une des chapes 252a-b.

En complément de chaque chape 252a-b, l'ensemble 1 comporte une bielle complémentaire 702 dont une première extrémité est montée articulée sur la structure 104a de l'aile 104 et dont une deuxième extrémité est montée articulée sur le panneau latéral 208a-b qui est du même côté. Il y a deux bielles complémentaires 702 disposées de part et d'autre du plan médian vertical XZ. L'articulation de chaque extrémité des bielles complémentaires 702 prend ici la forme d'une rotation autour d'un axe complémentaire parallèle à l'axe d'articulation 52, perpendiculairement au plan médian vertical XZ et parallèle à la direction transversale Y.

Chaque articulation d'une bielle complémentaire 702 est réalisée ici par un arbre complémentaire 704 qui traverse un alésage de ladite bielle complémentaire 702 et un alésage respectivement du panneau latéral 208a-b associé ou de la structure 104a de l'aile 104. Il y a ainsi deux arbres complémentaires 704 pour chaque bielle complémentaire 702.

Pour éviter que la chape 252a-b et la bielle complémentaire 702 qui sont du même côté travaillent en même temps, il est prévu que la bielle complémentaire 702 intervienne uniquement lorsque la chape 252a-b est en défaut. Pour cela, il est prévu que l'un des alésages de chaque bielle complémentaire 702 présente un diamètre supérieur au diamètre de l'arbre complémentaire 704 associé. Ainsi, tant que la chape 252a-b n'est pas en défaut, il n'y a pas de contact entre l'arbre complémentaire 704 et l'alésage de la bielle complémentaire 702 de diamètre supérieur, et lorsque la chape 252a-b se rompt, la structure rigide 202 s'abaisse ce qui entraîne l'arbre complémentaire 704 qui vient alors en contact avec le bord de l'alésage de diamètre supérieur et la bielle complémentaire 702 peut alors assurer son rôle. Dans le mode de réalisation de l'invention représenté ici, c'est l'alésage de la bielle complémentaire 702 correspondant à la liaison avec le panneau latéral 208a-b qui a un diamètre supérieur.

Chaque bielle complémentaire 704 est montée ici sur la structure 104a de l'aile 104 par l'intermédiaire d'une ferrure complémentaire 706 distincte de la chape 252a-b, ce qui permet d'assurer une sécurité complémentaire en cas de rupture de la chape 252a-b.

Selon un autre mode de réalisation non représenté qui permet également de compenser une rupture de l'une des chapes 252a-b, chaque élément de la liaison chape-panneau latéral est doublé, c'est-à-dire qu'au niveau du passage de l'arbre latéral, le panneau latéral 208a-b est doublé, c'est-à-dire qu'il y a deux plaques fixées l'une à l'autre et traversées par l'arbre latéral. De la même manière, les deux parois constituant la chape 252a-b sont doublées, c'est-à-dire qu'il y a deux plaques fixées l'une à l'autre et traversées par l'arbre latéral. Ainsi, en cas de rupture de l'une des parois, la paroi qui la double prend le relais. De la même manière, l'arbre latéral est doublé et constitué d'un arbre périphérique qui est cylindrique et creux et d'un arbre intérieur qui est emmanché dans l'arbre périphérique. Ainsi, en cas de défaillance de l'arbre périphérique, l'arbre intérieur peut prendre le relais.

## Revendications

1. Ensemble (1) pour un aéronef (10) comportant une aile (104) avec une structure (104a), ledit ensemble (1) présentant une direction verticale (Z) et un plan médian vertical (XZ) et comportant :
- un mât réacteur (106) présentant une structure primaire (202) formant un caisson et comportant un panneau latéral tribord (208a), un panneau latéral bâbord (208b), un longeron supérieur (204) et un longeron inférieur (206),
- une ferrure additionnelle (104c) destinée à être fixée à la structure (104a) de l'aile (104),
- une chape tribord (252a) et une chape bâbord (252b) disposées de part et d'autre du plan médian vertical (XZ), chacune étant destinée à être fixée à la structure (104a) de l'aile (104) et chacune étant montée articulée sur le panneau latéral (208a-b) qui est du même côté,
- une bielle avant (254) disposée dans le plan médian vertical (XZ), dont une extrémité amont est montée articulée sur le longeron supérieur (204) et dont une extrémité aval est montée articulée sur la ferrure additionnelle (104c),
- une bielle arrière (256) disposée dans le plan médian vertical (XZ), dont une extrémité amont est montée articulée sur le longeron inférieur (206) et dont une extrémité aval est destinée à être montée articulée sur la structure (104a) de l'aile (104), et
- un plot (502) d'axe parallèle à la direction verticale (Z) et présentant une extrémité proximale solidaire du longeron supérieur (204) et une extrémité distale montée dans une fenêtre (601) de la ferrure additionnelle (104c) à travers une liaison linéaire annulaire (504).

2. Ensemble (1) selon la revendication 1, **caractérisé en ce que** le plot (502) est mobile en translation par rapport à la ferrure additionnelle (104c) parallèlement à une direction longitudinale (X).

3. Ensemble (1) selon la revendication 2, **caractérisé en ce qu'**il comporte une bague (602) qui a une surface extérieure (602b) sphérique et qui est emmanchée sur l'extrémité distale du plot (502), une noix (604) qui a une surface intérieure sphérique dans laquelle la bague (602) est logée, où de part et d'autre de la noix (604), la surface extérieure de la noix (604) présente une nervure (606) parallèle à la direction longitudinale (X), où, sur les bords de la fenêtre (601), la ferrure additionnelle (104c) présente pour chaque nervure (606), un évidement (603) s'étendant parallèlement à la direction longitudinale (X) dans laquelle ladite nervure (606) est guidée en translation.

4. Ensemble (1) selon l'une des revendications 1 à 3, **caractérisé en ce que** le plot (502) est constitué de deux demi-cylindres (502a-b) accolés le long d'un plan (YZ), où l'extrémité proximale de chaque demi-cylindre (502a-b) est fixée au longeron supérieur (204).

5. Ensemble (1) selon l'une des revendications 1 à 4, **caractérisé en ce que** chaque articulation prend la forme d'une rotation autour d'un axe perpendiculaire au plan médian vertical (XZ).

6. Ensemble (1) selon l'une des revendications 1 à 5, **caractérisé en ce que** pour chaque chape (252a-b), l'ensemble (1) comporte une bielle complémentaire (702) dont une première extrémité est destinée à être montée articulée sur la structure (104a) de l'aile (104) et dont une deuxième extrémité est montée articulée sur le panneau latéral (208a-b) qui est du même côté.

7. Ensemble (1) selon la revendication 6, **caractérisé en ce que** chaque articulation d'une bielle complémentaire (702) est réalisée par un arbre complémentaire (704) qui traverse un alésage de ladite bielle complémentaire (702) et un alésage respectivement du panneau latéral (208a-b) associé ou de la structure (104a) de l'aile (104).

8. Ensemble (1) selon la revendication 7, **caractérisé en ce que** l'alésage de la bielle complémentaire (702) correspondant à la liaison avec le panneau latéral (208a-b) présente un diamètre supérieur au diamètre de l'arbre complémentaire (704) associé.

9. Aéronef (10) comportant une aile (104) avec une structure (104a), un turboréacteur (102) et un ensemble (1) selon l'une des revendications précédentes, où la ferrure additionnelle (104c) est fixée à la structure (104a) de l'aile (104), où chaque chape (252a-b) est fixée à la structure (104a) de l'aile (104), où l'extrémité aval de la bielle arrière (256) est montée articulée sur la structure (104a) de l'aile (104) et où le turboréacteur (102) est fixé sous le mât réacteur (106).
